# EUROPEAN PATENT SPECIFICATION

(11) **EP 2 747 508 B1**
(45) Date of publication and mention of the grant of the patent: **30.09.2015**
(21) Application number: 12825539.5
(22) Date of filing: 17.08.2012
(51) Int. Cl.: H04W 72/12, H04W 28/06

(54) **METHOD AND DEVICE FOR DATA TRANSMISSION**
VERFAHREN UND VORRICHTUNG FÜR DATENÜBERTRAGUNG
PROCÉDÉ ET DISPOSITIF POUR UNE TRANSMISSION DE DONNÉES

(30) Priority: 19.08.2011 CN 201110240607
(43) Date of publication of application: 25.06.2014
(73) Proprietor: China Academy of Telecommunications Technology, Haidian District Beijing 100191 (CN)
(72) Inventor: ZHANG, Huiying, Beijing 100191 (CN); QUAN, Haiyang, Beijing 100191 (CN); RUAN, Hang, Beijing 100191 (CN)
(74) Representative: Nony
(86) International application number: PCT/CN2012/080305
(87) International publication number: WO 2013/026374

(56) References cited:
- EP-A1- 2 200 392
- WO-A1-2009/025525
- WO-A2-2010/016726
- CN-A- 102 083 013
- CN-A- 102 158 971
- CN-A- 102 300 331

## Description

### Field of the Invention

The present invention relates to the field of wireless communications and particularly to a method and device for transmitting data.

### Background of the Invention

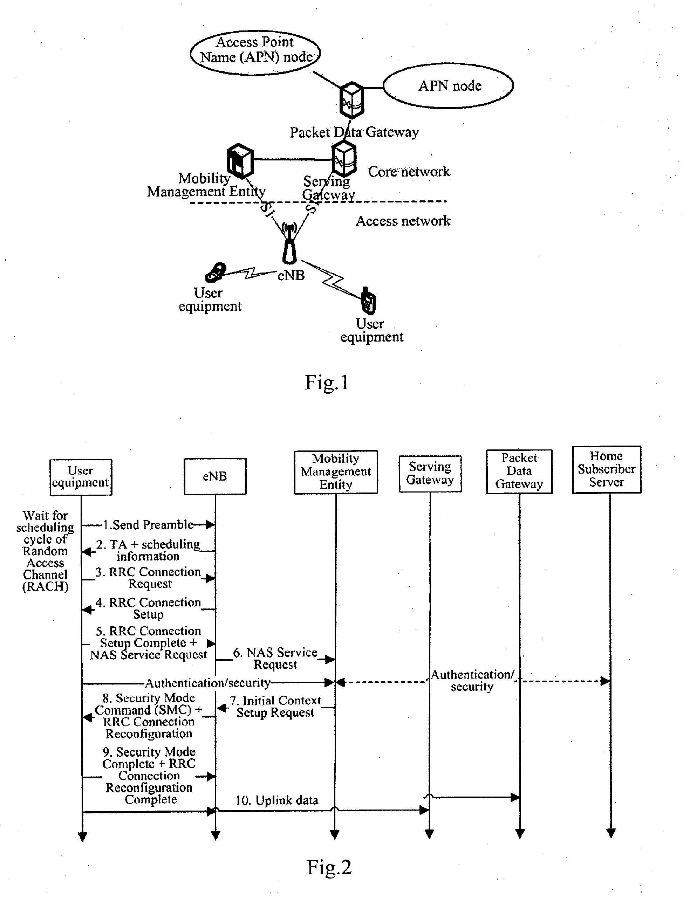

Fig.1 illustrates a network architecture of a Long Term Evolution (LTE) system including an Access Point Name (APN) node, a Packet Data Network GW (P-GW), a Serving Gateway (S-GW), a Mobility Management Entity (MME), an evolved Node B (eNB) and a User Equipment (UE).

In order to facilitate deployment of a new service, the LTE system adopts a design scheme in which a user plane and a control plane are separated so that separate network elements (i.e., the MME and the S-GW) are responsible for control plane signaling and a user plane bearer. The MME primarily functions to create Non Access Stratum (NAS) signaling, to ensure NAS signaling security, to create signaling across a core network, to provide a tracking service and a roaming service, to manage authorization and a bearer, etc. The S-GW is a portal for a handover between eNBs and a portal via which service data of 2G/3G and other systems is forwarded, and performs buffering of downlink data packets, some initialization tasks, specified interception, routing and forwarding of data packets, etc. The P-GW is responsible for policy enforcement, packet filtering, specified interception, Internet Protocol (IP) address assignment for a UE, charging, data packet reproduction, etc.

Control signaling among the UE, the eNB and the core network is processed by the MME; and user data is transmitted to the P-GW through the S-GW and then transmitted by the P-GW to various external APN nodes. Due to lowered coupling of the control signaling with the user data, the emergence of the new service only requires the network element responsible for the user plane bearer to be upgraded without influencing transmission of the control information, thus greatly lowering the complexity of network maintenance and the cost of device upgrading.

If the UE in an idle status in the LTE system has data to be transmitted to the network side, then a connection/bearer needs to be established before the data is transmitted, and a particular signaling flow is as illustrated in Fig.2.

Step 1: When the UE has data to be transmitted, firstly the UE waits for a Random Access Channel (RACH) scheduling cycle according to random access resource information configured by the system, selects a preamble and sends a random access request carrying the preamble, i.e., a message (Msg) 1, to the eNB.

Step 2: The eNB sends a random access response message, i.e., an Msg2, to the UE in a random access response window upon reception of the Msg1 sent from the UE. A random access response message can respond to random access requests of a plurality of UEs. The Msg2 is scheduled by Downlink Control Information (DCI) scrambled by a Random Access-Radio Network Temporary Identifier (RA-RNTI) determined by the location of a time-frequency resource over which the Msg1 is transmitted. Contents in the Msg2 include a backoff parameter, preamble identifiers corresponding to the Msg1, an uplink transmission Timing Advance (TA), an uplink resource assigned for an Msg3 (Msg3 scheduling information) and a Cell-Radio Network Temporary Identifier (C-RNTI). The backoff parameter indicates an average delay after which the UE initiates a next random access if the current random access fails. The UE determines a random access response sent thereto according to the RA-RNTI and the preamble identifiers in the Msg2, and if preambles corresponding to the preamble identifiers in the Msg2 include the preamble in the random access request initiated by the UE, then the UE determines its successful reception of the random access response message and subsequently sends the Msg3 to the network side. If the UE does not receive the Msg2 correctly, then the UE determines from the delay restriction of the backoff parameter a delay after which the next random access is initiated and further selects a random access resource to initiate the next random access. After the largest number of random accesses is reached, a Medium Access Control (MAC) layer of the UE reports a random access problem to a Radio Resource Control (RRC) layer to trigger a radio link failure procedure.

Step 3: The UE sends the Msg3 over the uplink resource assigned by the Msg2 upon reception of the Msg2. Contents included in the Msg3 varies from one scenario to another. For example, the Msg3 carries an RRC Connect Reestablish Request message generated by the RRC layer for an initial access.

Step 4: The eNB and the UE perform final contention resolution by an Msg4 including therein contents corresponding to the contents in the Msg3. For the initial access, the Msg4 carries a UE contention resolution identity which is an MAC control element (a Contention Resolution Identity MAC CE) including a Common Control Channel Service Data Unit (CCCH SDU) transmitted by the UE in the Msg3, and the UE compares the MAC CE with its own RRC layer information upon reception of the MAC CE to perform contention resolution. Moreover the Msg4 can include an RRC Connection Setup message to establish a Signaling Radio Bearer (SRB) 1 of the UE.

Step 5: The UE establishes the SRB1 according to information in the RRC Connection Setup message after performing contention resolution and sends an RRC Connection Setup Complete message to the network side. An NAS Service Request message can be sent to the network side along with the RRC Connection Setup Complete message.

Step 6: The eNB sends the NAS Service Request message to the MME upon reception of the RRC Connection Setup Complete message to request the MME for establishing related connections between the eNB corresponding to the UE and network elements of the core network, including a control plane connection with the MME and an Evolved Packet System Radio Access Bearer (E-RAB) with the S-GW.

Step 7: The MME notifies the eNB of information about the corresponding connections of the UE.

Step 8: The eNB sends a Security Mode Command (SMC) and an RRC Connection Reconfiguration message to the UE to activate security of the UE and establish a Data Radio Bearer (DRB) and another signaling radio bearer, i.e., an SRB2, for the UE. It shall be noted that the SMC and the RRC Connection Reconfiguration message can be sent in an RRC message or can be sent separately.

Step 9: The UE sends a Security Mode Complete message and an RRC Connection Reconfiguration Complete message to the network side after activating security and configuring the DRB and the SRB2.

Step 10: With the foregoing process, user plane data of the UE is carried over the DRB and the S1 and sent to the core network through the eNB and the S-GW; and control signaling of the UE and the core network is sent to the MME over the SRB and the control plane connection between the eNB and the MME.

For the UE in a detached status, when the UE has data to be transmitted to the network side, the UE needs to firstly initiate an Attach procedure to be attached to the network. Moreover an authentication procedure needs to be further performed to verify the UE for legality. A signaling flow will be more complex than the flow illustrated in Fig.2, and a detailed description thereof will be omitted here.

Machine-Type Communication (MTC), which is a new type of communication, is intended to integrate various different types of communication technologies, e.g., machine-to-machine communication, machine controlled communication, human-machine interactive communication and mobile networking communication, to thereby promote the development of social production and life styles. Future human-to-human communication services are expected to possibly take up only 1/3 of the entire user equipment market, and the majority of communication services are MTC communication services. Sometimes MTC is also referred to as Machine-to-Machine (M2M) communication or the Internet of Things.

An existing mobile communication network is designed for communication between one person and another, for example, to determine the capacity of the network. If MTC is desired to be supported by the mobile communication network, then a mechanism of a mobile communication system needs to be optimized in view of characteristics of MTC to thereby perform MTC better with no or little influence on legacy communication between one person and the other.

Some possible characteristics of MTC have been identified at present as follows: an MTC user equipment has low mobility; the MTC user equipment transmits data with the network side for a controllable period of time; the MTC user equipment transmits data with the network side with a low real-time requirement, that is, with a time tolerance; the MTC user equipment is power-limited and required to consume very low power; the MTC user equipment transmits only a small amount of data with the network side; the MTC user equipments can be managed per group; etc. A real MTC user equipment can have one or more of the foregoing characteristics.

The inventors have identified during making of the invention the following technical problems in the prior art.

Although the number of MTC user equipments is far above the number of legacy communication user equipments in MTC, there are a large number of MTC application scenarios in which there is unidirectional downlink transmission of small data, unidirectional uplink transmission of small data and interactive uplink/downlink transmission of small data with a low amount of data per transmission (typically tens to hundreds of bytes), which can be transmitted in one or several sub-frames. However in order to transmit such data, the network side and the MTC user equipment can transmit the data over a DRB/RB and an Sl/Iu bearer only after establishing the DRB/RB and the S1/Iu bearer in the signaling flow as illustrated in Fig.2 in the existing data transmission solution, but there is a considerable overhead of the signaling flow as illustrated in Fig.2, thus degrading the efficiency of the system.

EP 2200392 A1 provides a method for causing a user agent to release at least one of uplink and downlink semi-persistent communication resources in a mobile communication system, the method comprising the steps of, at the user agent receiving a downlink communication via a physical downlink control channel (PDCCH), using a semi persistent scheduling ratio temporary network identifier (SPS-RNTI) assigned to the device to decode a control message on physical downlink control channel (PDCCH) which may include downlink control information (DCI) in a plurality of DCI fields arranged in a DCI format and where the data from the at least one of the DCI fields is identical to a fixed SPS release value, releasing at least one of the uplink and down link semi-persistent communication resources.

### Summary of the Invention

Embodiments of the invention provide a method and device for transmitting data so as to lower a signaling overhead of a system.

A method for transmitting data includes:
an eNB sending a scheduling Radio Network Temporary Identifier, RNTI, for scheduling a resource to a user equipment; and
the eNB creating a context for the user equipment, scheduling an uplink resource and/or a downlink resource for the user equipment over a Physical Downlink Control Channel, PDCCH, scrambled by the scheduling RNTI according to the context, receiving uplink data transmitted from the user equipment over the scheduled uplink resource and transmitting downlink data to the user equipment over the scheduled downlink resource;
wherein the eNB sending the scheduling RNTI for scheduling a resource to the user equipment comprises:
   the eNB sending a paging message carrying the scheduling RNTI to the user equipment upon reception of a paging message from a core network device; or
   the eNB sending the scheduling RNTI for scheduling a resource to the user equipment comprises:
      the eNB sending a paging message carrying a dedicated preamble to the user equipment upon reception of a paging message from a core network device, wherein the dedicated preamble is different from a preamble for a random access of the user equipment; and
      the eNB receiving a message 1 for requesting a random access sent from the user equipment, wherein the message 1 carries the dedicated preamble, and sending a message 2 for responding to the random access request to the user equipment, wherein the message 2 carries the scheduling RNTI.

A method for transmitting data includes:
a user equipment receiving a scheduling Radio Network Temporary Identifier, RNTI, for scheduling a resource sent from an eNB; and
the user equipment detecting a Physical Downlink Control Channel, PDCCH, scrambled by the scheduling RNTI, and transmitting uplink data over an uplink resource scheduled by the detected PDCCH and/or receiving downlink data over a downlink resource scheduled by the detected PDCCH;
wherein the user equipment receiving the scheduling RNTI for scheduling a resource sent from the eNB comprises:
   the user equipment receiving a paging message sent from the eNB, wherein the paging message carries the scheduling RNTI for scheduling a resource; or
   the user equipment receiving the scheduling RNTI for scheduling a resource sent from the eNB comprises:
      the user equipment receiving a paging message sent from the eNB, wherein the paging message carries a dedicated preamble which is different from a preamble for a random access of the user equipment;
      the user equipment sending a message 1 for requesting a random access to the eNB, wherein the message 1 carries the dedicated preamble; and
      the user equipment receiving a message 2, for responding to the random access request, sent from the eNB, wherein the message.2 carries the scheduling RNTI.

An eNB includes:
an information processing unit configured to send a scheduling Radio Network Temporary Identifier, RNTI, for scheduling a resource to a user equipment;
a data transmitting unit configured to create a context for the user equipment, to schedule an uplink resource and/or a downlink resource for the user equipment over a Physical Downlink Control Channel, PDCCH, scrambled by the scheduling RNTI according to the context, to receive uplink data transmitted from the user equipment over the scheduled uplink resource and to transmit downlink data to the user equipment over the scheduled downlink resource.

A user equipment includes:
a processing unit configured to receive a scheduling Radio Network Temporary Identifier, RNTI, for scheduling a resource sent from an eNB; and
a transmitting unit configured to detect a Physical Downlink Control Channel, PDCCH, scrambled by the scheduling RNTI and to transmit uplink data over an uplink resource scheduled by the detected PDCCH and/or to receive downlink data over a downlink resource scheduled by the detected PDCCH.

In the solution according to the embodiment of the invention, an eNB sends a scheduling RNTI to a user equipment, schedules an uplink resource and/or a downlink resource for the user equipment by the scheduling RNTI, receives uplink data transmitted from the user equipment over the scheduled uplink resource and transmits downlink data to the user equipment over the scheduled downlink resource. Apparently, with this method, the eNB can transmit the uplink and downlink data without establishing an RRC connection, and since an RRC connection needs to be established with a considerable signaling overhead, this solution can lower a signaling overhead of the system effectively.

In the solution according to the embodiment of the invention, a user equipment receives a scheduling RNTI sent from an eNB, detects a PDCCH scrambled by the scheduling RNTI and transmits uplink data and/or receives downlink data over a resource or resources scheduled by the detected PDCCH. Apparently, with this method, the user equipment can transmit the uplink/downlink data without establishing an RRC connection, and since an RRC connection needs to be established with a considerable signaling overhead, this solution can lower a signaling overhead of the system effectively.

### Brief Description of the Drawings

Fig.1 is a schematic diagram of a network architecture of the LTE system in the prior art;
Fig.2 is a schematic diagram of a process of establishing a connection/bearer in the LTE system in the prior art;
Fig.3 is a schematic flow chart of a method according to an embodiment of the invention;
Fig.4 is a schematic flow chart of another method according to an embodiment of the invention;
Fig.5A is a schematic flow chart of a first embodiment of the invention;
Fig.5B is a schematic flow chart of a second embodiment of the invention;
Fig.6 is a schematic structural diagram of a device according to an embodiment of the invention; and
Fig.7 is a schematic structural diagram of another device according to an embodiment of the invention.

### Detailed Description of the Embodiments

In order to lower a signaling overhead of a system, an embodiment of the invention provides a method for transmitting data, and in the method, an eNB sends a scheduling Radio Network Temporary Identifier (RNTI) to a user equipment, schedules an uplink resource and/or a downlink resource for the user equipment using the scheduling RNTI, receives uplink data transmitted from the user equipment over the scheduled uplink resource and transmits downlink data to the user equipment over the scheduled downlink resource.

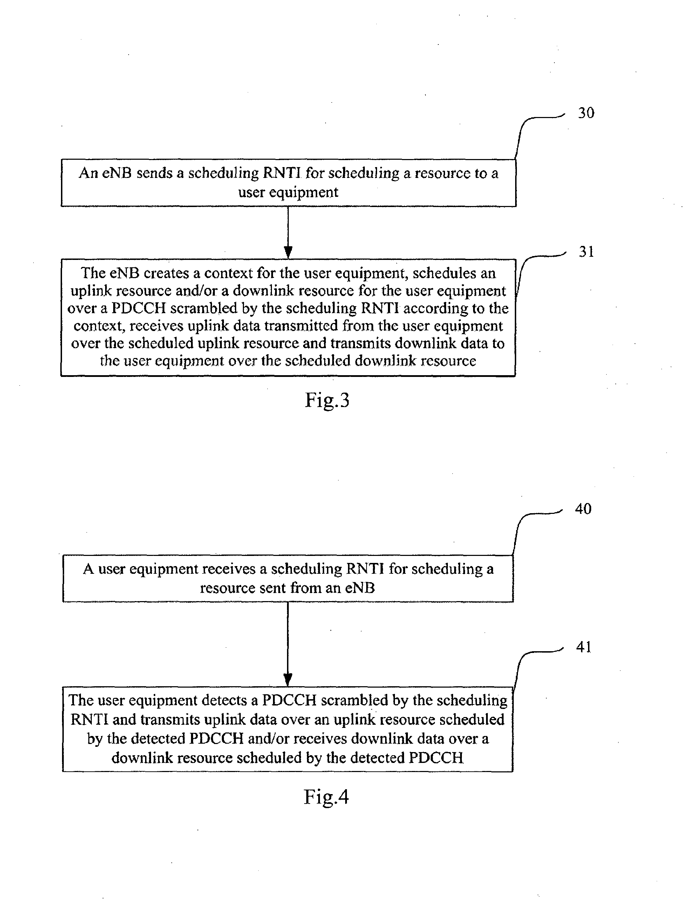

Referring to Fig.3, a method for transmitting data according to an embodiment of the invention includes the following steps.

Step 30: An eNB sends a scheduling RNTI for scheduling a resource to a user equipment, where the scheduling RNTI may be an existing RNTI including a C-RNTI, etc., or may be a newly defined RNTI.

Step 31: The eNB creates a context for the user equipment, schedules an uplink resource and/or a downlink resource for the user equipment over a Physical Downlink Control Channel (PDCCH) scrambled by the scheduling RNTI according to the context, receives uplink data transmitted from the user equipment over the scheduled uplink resource and transmits downlink data to the user equipment over the scheduled downlink resource. Particularly if the eNB schedules only the downlink resource for the user equipment, then the eNB transmits the downlink data to the user equipment over the scheduled downlink resource; if the eNB schedules the downlink resource and the uplink resource for the user equipment, then the eNB transmits the downlink data to the user equipment over the scheduled downlink resource and receives the uplink data transmitted from the user equipment over the scheduled uplink resource; and if the eNB schedules only the uplink resource for the user equipment, then the eNB receives the uplink data transmitted from the user equipment over the scheduled uplink resource.

In an implementation, in the step 30, the eNB may send the scheduling RNTI to the user equipment by sending a paging message carrying the scheduling RNTI to the user equipment upon reception of a paging message from a core network device. Correspondingly, in the step 31, the eNB creates the context for the user equipment according to a default configuration specified in the protocol RS36.331 after sending the paging message to the user equipment, schedules the uplink resource and/or the downlink resource for the user equipment over the PDCCH scrambled by the scheduling RNTI according to the context, receives the uplink data transmitted from the user equipment over the scheduled uplink resource and transmits the downlink data to the user equipment over the scheduled downlink resource.

In another implementation, in the step 30, the eNB may send the scheduling RNTI to the user equipment by sending a paging message carrying the scheduling RNTI to the user equipment upon reception of a paging message from a core network device. Then the eNB receives a message 1 for requesting a random access sent from the user equipment, where the message 1 carries a random access preamble; the eNB sends a message 2 for responding to the random access request to the user equipment, where the message 2 carries an uplink TA and a C-RNTI; and the eNB receives a message 3 carrying the scheduling RNTI sent from the user equipment. Then in the step 31, the eNB releases the C-RNTI carried in the message 2 upon reception of the message 3, creates the context for the user equipment according to a default configuration specified in the protocol RS36.331, schedules the uplink resource and/or the downlink resource for the user equipment over the PDCCH scrambled by the scheduling RNTI according to the context, receives the uplink data transmitted from the user equipment over the scheduled uplink resource and transmits the downlink data to the user equipment over the scheduled downlink resource. Here the user equipment transmits the uplink data to the eNB after performing uplink synchronization with the eNB according to the uplink TA.

Particularly if the eNB determines from Buffer Status Report (BSR) information carried in the message 3 that the user equipment has uplink data to be transmitted, then the eNB schedules the uplink resource and the downlink resource for the user equipment over the PDCCH scrambled by the scheduling RNTI according to the context; otherwise, the eNB schedules the downlink resource for the user equipment over the PDCCH scrambled by the scheduling RNTI according to the context. The BSR information is information indicating the amount of data of the uplink data to be transmitted by the user equipment.

In a further implementation, in the step 30, the eNB may send the scheduling RNTI to the user equipment by sending a paging message carrying a dedicated preamble to the user equipment upon reception of a paging message from a core network device, where the dedicated preamble is different from a preamble for a random access of the user equipment (i.e., a random access preamble); and the eNB receives a message 1 for requesting a random access sent from the user equipment, where the message 1 carries the dedicated preamble, and sends a message 2 for responding to the random access request to the user equipment, where the message 2 carries the scheduling RNTI. Correspondingly in the step 31, the eNB creates the context for the user equipment according to a default configuration specified in the protocol RS36.331 upon reception of the message 2, schedules the uplink resource and/or the downlink resource for the user equipment over the PDCCH scrambled by the scheduling RNTI according to the context, receives the uplink data transmitted from the user equipment over the scheduled uplink resource and transmits the downlink data to the user equipment over the scheduled downlink resource.

In a still further implementation, in the step 30, the eNB may send the scheduling RNTI to the user equipment by sending a paging message carrying a dedicated preamble to the user equipment upon reception of a paging message from a core network device, where the dedicated preamble is different from a preamble for a random access of the user equipment (i.e., a random access preamble); and the eNB receives a message 1 for requesting a random access sent from the user equipment, where the message 1 carries the dedicated preamble, and sends a message 2 for responding to the random access request to the user equipment, where the message 2 carries the scheduling RNTI. Then the eNB receives a message 3 sent from the user equipment, where the message 3 carries the scheduling RNTI; and correspondingly in the step 31, the eNB creates the context for the user equipment according to a default configuration specified in the protocol RS36.331 upon reception of the message 3, schedules the uplink resource and/or the downlink resource for the user equipment over the PDCCH scrambled by the scheduling RNTI according to the context, receives the uplink data transmitted from the user equipment over the scheduled uplink resource and transmits the downlink data to the user equipment over the scheduled downlink resource.

Particularly if the eNB determines from Buffer Status Report (BSR) information carried in the message 3 that the user equipment has uplink data to be transmitted, then the eNB schedules the uplink resource and the downlink resource for the user equipment over the PDCCH scrambled by the scheduling RNTI according to the context; otherwise, the eNB schedules the downlink resource for the user equipment over the PDCCH scrambled by the scheduling RNTI according to the context. The BSR information is information indicating the amount of data of the uplink data to be transmitted by the user equipment.

For the foregoing four implementations:

Furthermore, the eNB sends Acknowledgement (ACK) or Non-Acknowledgement (NACK) information to the user equipment dependent upon a reception condition upon reception of the uplink data transmitted from the user equipment over the scheduled uplink resource. Particularly if the uplink data is received correctly, then the eNB sends ACK information; otherwise, the eNB sends NACK information.

Furthermore, if the eNB schedules only the downlink resource for the user equipment, then the eNB carries an instruction for releasing the scheduling RNTI in the last piece of downlink data transmitted to the user equipment; and if the eNB receives ACK information fed back from the user equipment for the last piece of downlink data, then the eNB releases the scheduling RNTI and the context; otherwise, the eNB retransmits the last piece of downlink data carrying the instruction to the user equipment.

Of course, other implementations are also possible here, for example, the eNB sends an instruction for releasing the scheduling RNTI to the user equipment after transmitting the last piece of downlink data to the user equipment and receiving ACK information fed back from the user equipment for the last piece of downlink data, and if the eNB receives ACK information fed back from the user equipment for the instruction, then the eNB releases the scheduling RNTI and the context; otherwise, the eNB retransmits the instruction to the user equipment.

If the eNB schedules the downlink resource and the uplink resource for the user equipment, then the eNB carries an instruction for releasing the scheduling RNTI in the last piece of downlink data transmitted to the user equipment after receiving correctly the uplink data transmitted from the user equipment and determining from BSR information carried in the uplink data that the uplink data is the last piece of data transmitted from the user equipment; and if the eNB receives ACK information fed back from the user equipment for the last piece of downlink data, then the eNB releases the scheduling RNTI and the context; otherwise, the eNB retransmits the last piece of downlink data carrying the instruction.

Of course, other implementations are also possible here, for example, the eNB sends an instruction for releasing the scheduling RNTI to the user equipment after transmitting the last piece of downlink data to the user equipment and receiving ACK information fed back from the user equipment for the last piece of downlink data, and receiving correctly the uplink data transmitted from the user equipment and determining from BSR information carried in the uplink data that the uplink data is the last piece of data transmitted from the user equipment, and if the eNB receives ACK information fed back from the user equipment for the instruction, then the eNB releases the scheduling RNTI and the context; otherwise, the eNB retransmits the instruction to the user equipment.

If the eNB schedules only the uplink resource for the user equipment, then the eNB sends an instruction for releasing the scheduling RNTI to the user equipment after receiving correctly the uplink data transmitted from the user equipment and determining from BSR information carried in the uplink data that the uplink data is the last piece of data transmitted from the user equipment; and if the eNB receives ACK information fed back from the user equipment for the instruction, then the eNB releases the scheduling RNTI and the context; otherwise, the eNB retransmits the instruction to the user equipment.

Furthermore the eNB may start a valid scheduling RNTI timer after creating the context for the user equipment and before scheduling the uplink resource and/or the downlink resource for the user equipment over the PDCCH scrambled by the scheduling RNTI according to the context; and the eNB may stop the valid scheduling RNTI timer after releasing the scheduling RNTI and the context. If the scheduling RNTI and the context have not been released when the valid scheduling RNTI timer expires, then the scheduling RNTI and the context are released.

Furthermore the eNB may further send the received uplink data and/or transmission acknowledgement information about whether the downlink data has been transmitted successfully to a core network device. Particularly if the eNB schedules only the downlink resource for the user equipment, then the eNB sends the transmission acknowledgement information about whether the downlink data has been transmitted successfully to a core network device; if the eNB schedules the downlink resource and the uplink resource for the user equipment, then the eNB sends the received uplink data and the transmission acknowledgement information about whether the downlink data has been transmitted successfully to a core network device; and if the eNB schedules only the uplink resource for the user equipment, then the eNB sends the received uplink data to the core network device.

Furthermore in the step 30, the eNB may send a paging message for one cell; or the eNB may send paging messages respectively for cells in a Tracking Area (TA) range as per a predetermined alternate paging rule.

Furthermore the eNB may send the paging message to the user equipment upon determining from data transmission characteristic information carried in the paging message sent from the core network device that the current data transmission needs to be performed in a data transmission mode without establishing an RRC connection. For example, if small data transmission characteristic information is carried in the paging message sent from the core network device, then the eNB determines that the current data transmission needs to be performed in a data transmission mode without establishing an RRC connection.

Furthermore the user equipment may be a user equipment without a Radio Resource Control (RRC) connection with the network side, for example, the user equipment is a user equipment in an idle status.

In order to lower a signaling overhead of a system, an embodiment of the invention provides a method for transmitting data, and in this method, a user equipment receives a scheduling RNTI sent from an eNB, detects a PDCCH scrambled by the scheduling RNTI and transmits uplink data and/or receives downlink data over a resource or resources scheduled by the detected PDCCH.

Referring to Fig.4, a method for transmitting data according to an embodiment of the invention includes the following steps.

Step 40: A user equipment receives a scheduling RNTI for scheduling a resource sent from an eNB, where the scheduling RNTI may be an existing RNTI including a C-RNTI, etc., or may be a newly defined RNTI.

Step 41: The user equipment detects a PDCCH scrambled by the scheduling RNTI and transmits uplink data over an uplink resource scheduled by the detected PDCCH and/or receives downlink data over a downlink resource scheduled by the detected PDCCH. Particularly if the detected PDCCH carries only downlink scheduling signaling, then the user equipment receives the downlink data transmitted from the eNB to the user equipment over the downlink resource indicated by the downlink scheduling signaling; if the detected PDCCH carries downlink scheduling signaling and uplink scheduling signaling, then the user equipment receives the downlink data transmitted from the eNB to the user equipment over the downlink resource indicated by the downlink scheduling signaling and transmits the uplink data to the eNB over the uplink resource indicated by the uplink scheduling signaling; and if the detected PDCCH carries only the uplink scheduling signaling, then the user equipment transmits the uplink data to the eNB over the uplink resource indicated by the uplink scheduling signaling.

In an implementation, in the step 40, the user equipment may receive the scheduling RNTI sent from the eNB by receiving a paging message sent from the eNB, where the paging message carries the scheduling RNTI for scheduling a resource. Correspondingly in the step 41, the user equipment detects the PDCCH scrambled by the scheduling RNTI upon reception of the paging message, and transmits the uplink data over the uplink resource scheduled by the detected PDCCH and/or receives the downlink data over the downlink resource scheduled by the detected PDCCH.

In another implementation, in the step 40, the user equipment may receive the scheduling RNTI sent from the eNB by receiving a paging message sent from the eNB, where the paging message carries the scheduling RNTI for scheduling a resource. Then the user equipment sends a message 1 for requesting a random access to the eNB, where the message 1 carries a random access preamble; and the user equipment receives a message 2, for responding to the random access request, sent from the eNB, where the message 2 carries an uplink TA and a C-RNTI, and sends a message 3 carrying the scheduling RNTI to the eNB. Then in the step 41, the user equipment detects the PDCCH scrambled by the scheduling RNTI upon reception of the message 3, and transmits the uplink data over the uplink resource scheduled by the detected PDCCH and/or receives the downlink data over the downlink resource scheduled by the detected PDCCH. If the user equipment has uplink data to be transmitted, then the message 3 further carries BSR information taking a value other than 0. The BSR information is information indicating the amount of data of the uplink data to be transmitted by the user equipment.

In a further implementation, in the step 40, the user equipment may receive the scheduling RNTI sent from the eNB by receiving a paging message sent from the eNB, where the paging message carries a dedicated preamble which is different from a preamble for a random access of the user equipment; and the user equipment sends a message 1 for requesting a random access to the eNB, where the message 1 carries the dedicated preamble; and the user equipment receives a message 2, for responding to the random access request, sent from the eNB, where the message 2 carries the scheduling RNTI. Correspondingly in the step 41, the user equipment detects the PDCCH scrambled by the scheduling RNTI after sending the message 2, and transmits the uplink data over the uplink resource scheduled by the detected PDCCH and/or receives the downlink data over the downlink resource scheduled by the detected PDCCH.

In a still further implementation, in the step 40, the user equipment may receive the scheduling RNTI sent from the eNB by receiving a paging message sent from the eNB, where the paging message carries a dedicated preamble which is different from a preamble for a random access of the user equipment; the user equipment sends a message 1 for requesting a random access to the eNB, where the message 1 carries the dedicated preamble; and the user equipment receives a message 2, for responding to the random access request, sent from the eNB, where the message 2 carries the scheduling RNTI. Then the user equipment sends a message 3 carrying the scheduling RNTI to the eNB. Correspondingly in the step 41, the user equipment detects the PDCCH scrambled by the scheduling RNTI after sending the message 3, and transmits the uplink data over the uplink resource scheduled by the detected PDCCH and/or receives the downlink data over the downlink resource scheduled by the detected PDCCH. If the user equipment has uplink data to be transmitted, then the message 3 further carries BSR information taking a value other than 0.

In the foregoing four implementations:

Furthermore the user equipment sends ACK or NACK information to the eNB dependent upon a reception condition after receiving the downlink data over the downlink resource scheduled by the detected PDCCH. Particularly if the downlink data is received correctly, then the user equipment sends ACK information; otherwise, the user equipment sends NACK information.

Furthermore if the user equipment receives correctly an instruction, for releasing the scheduling RNTI, sent from the eNB, then the user equipment feeds ACK information back to the eNB, releases the scheduling RNTI and stops detecting the PDCCH; otherwise, the user equipment feeds NACK information back to the eNB and continues with detecting the PDCCH, where the instruction is carried in the downlink data or another message.

Furthermore the user equipment may start a valid scheduling RNTI timer after the user equipment receives the scheduling RNTI and before the user equipments detects the PDCCH scrambled by the scheduling RNTI; and the user equipment stops the valid scheduling RNTI timer after the user equipment releases the scheduling RNTI. If the scheduling RNTI has not been released when the valid scheduling RNTI timer expires, then the user equipment releases the scheduling RNTI and stops detecting the PDCCH.

Furthermore the user equipment is a user equipment without an RRC connection with the network side.

The invention will be described below with particular embodiments.

At the e Node B (eNB) side:

The eNB sends a paging message to an MTC device upon reception of a paging message from a core network, where the paging message carries a scheduling RNTI or a dedicated preamble.

In the case that the paging message carries a scheduling RNTI, in the case that the user equipment is allowed to use a stored timing advance, the eNB creates a context for the user equipment using a default configuration, and in the case that the use of a stored timing advance is not allowed, then eNB creates a context for the user equipment upon reception of an Msg3 carrying the scheduling RNTI assigned in the paging message.

In the case that the paging message carries a dedicated preamble, the eNB carries a scheduling RNTI in a downlink Msg2 upon reception of the dedicated preamble and creates a context for the user equipment using a default configuration.

The eNB schedules a downlink resource for the MTC device by the scheduling RNTI for a period of time after creating the context for the user equipment, and if BSR is received in an Msg3, then the eNB schedules an uplink resource for the MTC device by the scheduling RNTI.

In the case that there is uplink data to be transmitted, when the eNB receives an uplink BSR of 0 and acknowledges the uplink data, if the eNB has downlink data to be transmitted, then the eNB may carry an instruction for releasing the scheduling RNTI in the transmitted last piece of small data, and if ACK is received in the uplink, then the eNB releases the scheduling RNTI and the context of the user equipment, and if a valid scheduling RNTI timer is set, then the timer is stopped; and if NACK is received or no feedback is received, then the eNB retransmits the last piece of data still containing the instruction for releasing the scheduling RNTI. If the eNB has no downlink data, then the eNB may send the instruction for releasing the scheduling RNTI separately, and if ACK is received in the uplink, then the eNB releases the scheduling RNTI and the context of the user equipment, and if a valid scheduling RNTI timer is set, then the timer is stopped; and if NACK is received or no feedback is received, then the eNB retransmits the instruction for releasing the scheduling RNTI.

In the case that there is no uplink data to be transmitted, the eNB may carry an instruction for releasing the scheduling RNTI in the transmitted last piece of small data, and if ACK is received in the uplink, then the eNB releases the scheduling RNTI and the context of the user equipment; and if NACK is received or no feedback is received, then the eNB retransmits the last piece of small data still containing the instruction for releasing the scheduling RNTI.

A validity period may be set for the scheduling RNTI, and the validity period may be fixed and carried in a system broadcast or carried in a paging message. When the validity period of the scheduling RNTI expires, the eNB releases the scheduling RNTI and also the context of the user equipment.

At the user equipment side:

An MTC device initiates a random access using a contention preamble in the case that the user equipment is not allowed to use a stored timing advance upon reception of a paging message carrying a scheduling RNTI, and sends an Msg3 using the scheduling RNTI carried in the paging message upon reception of an Msg2, where if there is uplink data to be transmitted, then the Msg3 may include BSR information. After the Msg3 is sent, a PDCCH is detected in a period of time for which the scheduling RNTI is valid, and if scheduling information for the scheduling RNTI is detected, then downlink data is received using a default configuration. In the case that the user equipment is allowed to use a stored timing advance, a PDCCH is detected in a period of time for which the scheduling RNTI is valid, and if scheduling information for the scheduling RNTI is detected, then downlink data is received using a default configuration, and in the case that the user equipment is allowed to use a stored timing advance, if the user equipment needs to perform uplink synchronization, then the user equipment may send a contention preamble and obtain the timing advance from the Msg2.

The MTC device initiates a random access using a dedicated preamble upon reception of a paging message carrying the dedicated preamble and obtains timing advance and a scheduling RNTI from an Msg2 fed back from an eNB. If a PDCCH is detected in a period of time for which the scheduling RNTI is valid and scheduling information for the scheduling RNTI is detected, then uplink data and acknowledgement information are transmitted and downlink data is received using a default configuration.

The MTC device receives an instruction for releasing the scheduling RNTI, and if ACK is fed back, then the MTC device releases the scheduling RNTI after the feedback and stops detecting the PDCCH; and if NACK is fed back, then the MTC device continues with detecting the PDCCH.

After the period of time for which the scheduling RNTI is valid expires, the MTC device stops detecting the PDCCH and releases the scheduling RNTI.

### First Embodiment:

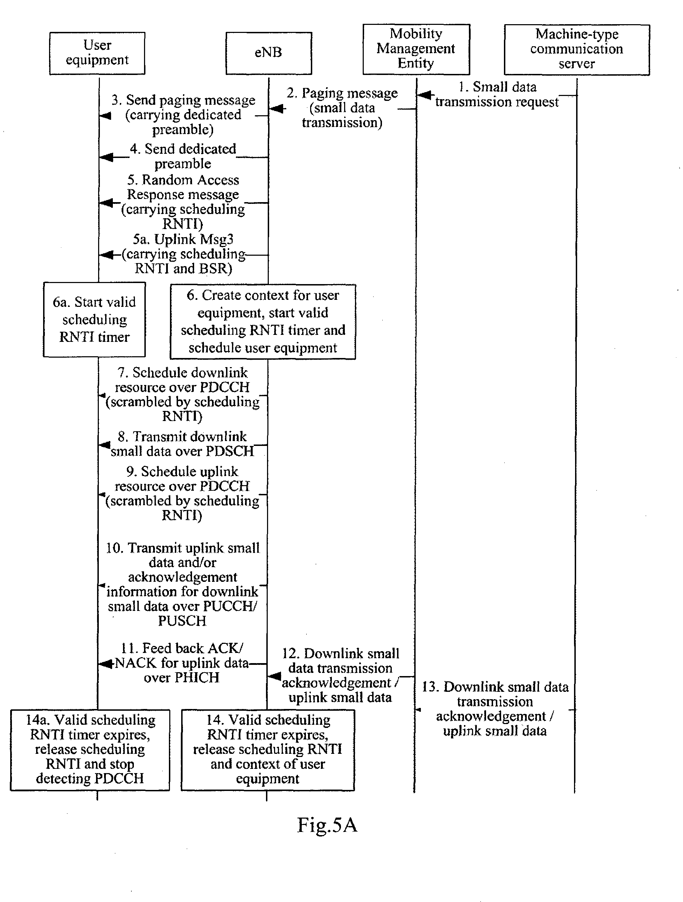

This embodiment relates to a flow with a dedicated preamble carried in a paging message as illustrated in Fig.5A.

Step 1: The network side (e.g., an MTC server) with a small amount of small data to be transmitted to a UE sends a small data transmission request carrying the small data to an MME.

Step 2: The MME sends the small data and an identifier S-TMSI of the UE to a relevant eNB in a paging message, where the paging message may further carry small data transmission characteristic information to notify the eNB that the current data transmission needs to be performed in a data transmission mode without establishing an RRC connection.

Step 3: The eNB stores the relevant information and pages the user equipment by a paging message carrying a dedicated preamble.

Step 4: The user equipment initiates a random access using the dedicated preamble, that is, sends an Msg1.

Step 5: The eNB returns a random access response message (i.e., an Msg2) to the user equipment, where the Msg2 carries an uplink TA and a scheduling RNTI.

Step 5a: If the user equipment has uplink small data to be transmitted, then the user equipment sends an Msg3 including the scheduling RNTI, a BSR, etc..

Step 6: The eNB creates a context for the user equipment using a default configuration and starts a valid scheduling RNTI timer.

Step 6a: The user equipment starts a valid scheduling RNTI timer upon reception of the Msg2 in the step 5.

Step 7: The eNB schedules a downlink resource for the user equipment over a PDCCH scrambled by the scheduling RNTI.

Step 8: The eNB transmits the downlink small data over the downlink resource, where the downlink small data may be encapsulated in an NAS container but will not be limited thereto.

Step 9: If there is uplink data to be transmitted, then the eNB schedules an uplink resource for the user equipment over the PDCCH scrambled by the scheduling RNTI.

Step 10: If there is uplink scheduling, then the user equipment transmits the uplink data over the uplink resource scheduled in the step 9 and sends acknowledgement information for the downlink data; and if there is no uplink resource scheduled in the step 9, then the user equipment sends the acknowledgement information for the downlink data over a PUCCH.

Step 11: If there is uplink transmission, then the eNB sends acknowledgement information for the uplink data over a Physical Hybrid Automatic Repeat Request Indicator Channel (PHICH); and if there is still downlink data transmission, then the eNB may alternatively carry the acknowledgement information for the uplink data in a message scheduling the downlink data transmission.

In the case that there is uplink data transmission, when the eNB receives an uplink BSR of 0 and acknowledges the uplink data, if the eNB has downlink data, then the eNB may carry an instruction for releasing the scheduling RNTI in the transmitted last piece of small data, and if ACK is received in the uplink, then the eNB releases the scheduling RNTI and the context of the user equipment, and if a valid scheduling RNTI timer is set, then the timer is stopped. If NACK is received or no feedback is received, then the last piece of data still including the instruction for releasing the scheduling RNTI is retransmitted. If the eNB has no downlink data, then the eNB may send the instruction for releasing the scheduling RNTI separately; and if ACK is received in the uplink, then the scheduling RNTI and the context of the user equipment are released; and if NACK is received or no feedback is received, then the instruction for releasing the scheduling RNTI is retransmitted. In the case that there is no uplink data to be transmitted, then the eNB may carry an instruction for releasing the scheduling RNTI in the transmitted last piece of small data, and if ACK is received in the uplink, then the scheduling RNTI and the context of the user equipment are released, and if a valid scheduling RNTI timer is set, then the timer is stopped. If NACK is received or no feedback is received, then the last piece of data still including the instruction for releasing the scheduling RNTI is retransmitted.

In a period of time for which the scheduling RNTI is valid, the step 7 to the step 11 may be repeated dependent upon a data transmission condition.

Step 12: The eNB sends the uplink small data/ the transmission acknowledgement information for the downlink small data to the MME.

The eNB may not feed back success acknowledgment for the downlink small data but may feed back only failure acknowledgement, where a failure is determined when no acknowledgement information of the user equipment for the downlink small data has been received after the period of time for which the scheduling RNTI is valid expires.

Step 13: The MME forwards the received uplink small data/transmission acknowledgement information for the downlink small data to the MTC server.

Step 14: The eNB side releases the scheduling RNTI and the context of the user equipment when the valid scheduling RNTI timer expires.

Step 14a: The user equipment releases the scheduling RNTI and stops detecting the PDCCH when the valid scheduling RNTI timer expires.

Note 1: If there is no uplink data to be transmitted, then the step 5a may be omitted.

Note 2: The small data here is taking small data generated by the MTC server as an example, but such a case will not be precluded that another core network node has small data to be transmitted, and the same flow will apply thereto.

Note 3: If the step 5a is performed, then the foregoing step 9 is performed, and in the step 10, the uplink data and the acknowledgement information for the downlink data are transmitted over the uplink resource scheduled in the step 9; and if the step 5a is omitted, then the step 9 is omitted, and then the user equipment sends the acknowledgement information for the downlink data over the PUCCH.

Note 4: The scheduling RNTI may be but will not be limited to a C-RNTI.

Note 5: The foregoing flow relates to the case of paging for a specific cell, and since the MME may initiate paging in a TA (Tracking Area), the MME may perform paging for cells in the TA as per a predetermined alternate paging rule but will not be limited thereto. After paging for a specific cell, if an Msg1 carrying a dedicated preamble is received, then the subsequent steps starting with the step 5 are performed while stopping paging. If no Msg1 carrying a dedicated preamble is received in a fixed time period, then paging is initiated for a next cell or paging is reinitiated for the current cell.

Note 6: The user equipment in this embodiment may be a user equipment without an RRC connection with the network side.

### Second Embodiment:

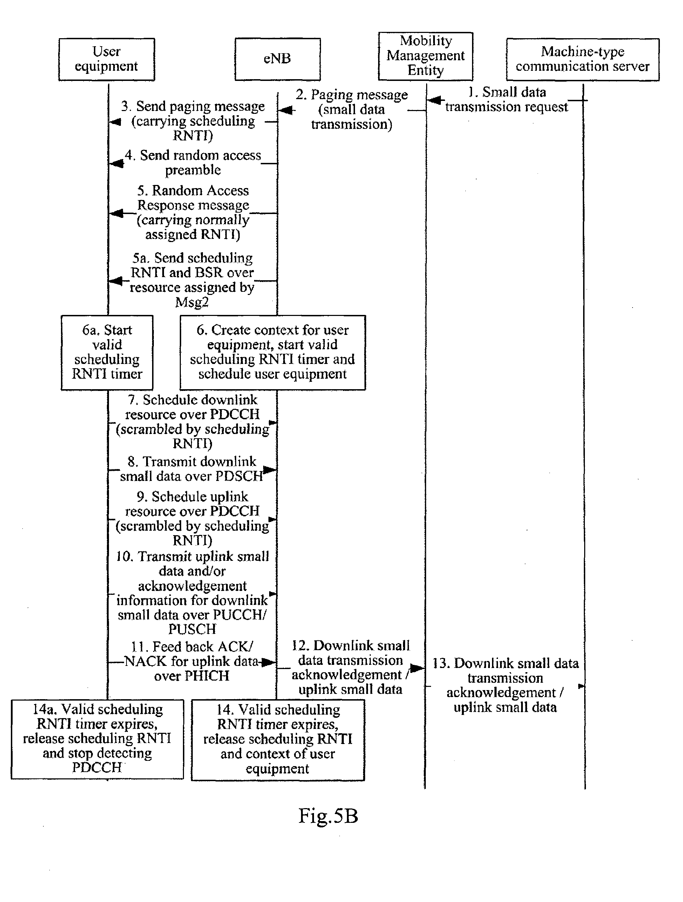

This embodiment relates to a flow with a scheduling RNTI carried in a paging message as illustrated in Fig.5B.

The other steps than the step 3 to the step 6 are the same as in the first embodiment, and a repeated description thereof will be omitted here.

Step 3: The eNB stores the relevant information and pages the user equipment by a paging message carrying a scheduling RNTI.

Step 4: The user equipment initiates a random access using a contention random access preamble, that is, sends an Msg1.

Step 5: The eNB returns a random access response message (i.e., an Msg2) to the user equipment, where the Msg2 carries an uplink TA and an allocated C-RNTI.

Step 5a: The user equipment sends the scheduling RNTI to the eNB in an Msg3 upon, reception of the Msg2, and if there is uplink data to be transmitted, then the Msg3 may carry an BSR.

Step 6: The eNB releases the RNTI carried in the step 5 correspondingly over an uplink resource over which the Msg3 is received and schedules the user equipment using the scheduling RNTI upon reception of the Msg3 carrying the scheduling RNTI.

The following three notes need to be added besides the note 1 to the note 4 for the case that a dedicated preamble is carried in a paging message.

Note 5: The user equipment may store a timing advance in a last transmission process and may not initiate a random access but perform uplink synchronization using the stored timing advance. If this case is allowed, then the user equipment and the eNB may perform the subsequent operations starting with the step 6 directly, and the user equipment may judge whether to perform the step 3 to the step 5a dependent upon a condition, or they may agree on a fixed timing, and the eNB may schedule the user equipment starting with the fixed timing.

Note 6: The foregoing flow relates to the case of paging for a specific cell, and since the MME may initiate paging in a TA, the MME may perform paging for cells in the TA as per a predetermined alternate paging rule but will not be limited thereto.

After paging for a specific cell, in the case that the user equipment is not allowed to use the stored timing advance, if the Msg3 carrying the scheduling RNTI is received in a period of time, then the subsequent steps starting with the step 6 are performed while stopping paging; otherwise, paging is initiated for a next cell or paging is reinitiated for the current cell. In the case that the user equipment is allowed to use the stored timing advance, if the uplink data or the acknowledgment information for the downlink data from the user equipment is received in a period of time (the step 10), then the subsequent steps starting with the step 10 are performed while stopping paging; otherwise, paging is initiated for a next cell or paging is reinitiated for the current cell.

Note 7: The paging message may carry the downlink data.

Note 8: The user equipment in this embodiment may be a user equipment without an RRC connection with the network side.

In the LTE system, the paging message may be modified in the following schemes. First Scheme

An information element for indicating a scheduling RNTI is added to the paging message:

| | |
|---|---|
| temp-Schedule-RNTI-vxy0 C-RNTI | OPTIONAL -- Need OP |

### Second Scheme

An information element for indicating a dedicated preamble is added to the paging message:

| | |
|---|---|
| rach-ConfigDedicated-vxy0 RACH-ConfigDedicated | OPTIONAL -- Need OP |

### Third Scheme

Information elements for indicating a scheduling RNTI and downlink data are added to the paging message:

| | | |
|---|---|---|
| temp-Schedule-RNTI-vxy0 C-RNTI | OPTIONAL, | -- Need OP |
| dedicatedInfoNAS-vxy0 DedicatedInfoNAS | OPTIONAL | |

In the LTE system, a new Msg3 carrying a scheduling RNTI may be defined, for example:

```
     ScheduleRequest ::= SEQUENCE {
         criticalExtensions CHOICE {
             ScheduleRequest-rx ScheduleRequest-rx-IEs,
             criticalExtensionsFuture SEQUENCE {}
         }
     }
     ScheduleRequest-rx-IEs ::= SEQUENCE {
         temp-Schedule-RNTI C-RNTI,
         buffer-Status-Report BIT STRING (SIZE (6)) OPTIONAL,
         ...
     }
```

For the LTE system, a downlink information transmission (DLInformationTransfer) message may be modified in the following several schemes.

### First scheme:

An information element (releaseInd) for releasing a scheduling RNTI is added to the DLInformationTransfer message.

### Second scheme:

An information element for releasing a scheduling RNTI is added to the DLInformationTransfer message:

```
     DLInformationTransfer-vxy0-IEs ::= SEQUENCE {
         releaseInd ENUMERATED {true} OPTIONAL,
         nonCriticalExtension SEQUENCE {}
    OPTIONAL -- Need OP
     }
```

Based upon the same inventive idea, an embodiment of the invention further provides an eNB, and since the eNB addresses the problem under a similar principle to the method for transmitting data illustrated in Fig.3, so reference may be made to the implementation of the method for an implementation of the eNB, and a repeated description thereof will be omitted here.

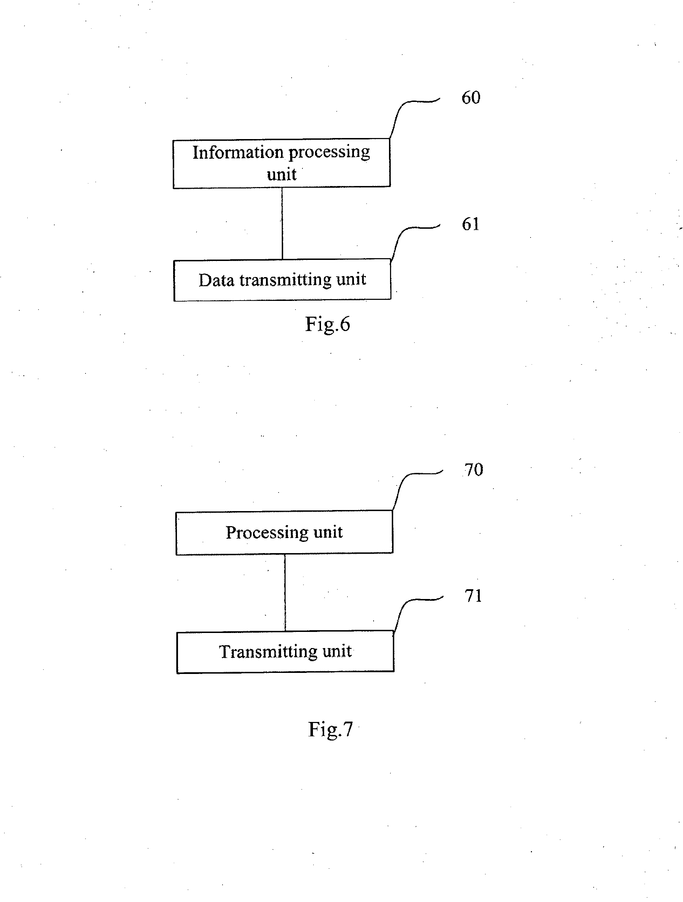

Referring to Fig.6, an embodiment of the invention provides an eNB including:
an information processing unit 60 configured to send a scheduling Radio Network Temporary Identifier (RNTI) for scheduling a resource to a user equipment; and
a data transmitting unit 61 configured to create a context for the user equipment, to schedule an uplink resource and/or a downlink resource for the user equipment over a Physical Downlink Control Channel (PDCCH) scrambled by the scheduling RNTI according to the context, to receive uplink data transmitted from the user equipment over the scheduled uplink resource and to transmit downlink data to the user equipment over the scheduled downlink resource.

The information processing unit 60 is configured to send a paging message carrying the scheduling RNTI to the user equipment upon reception of a paging message from a core network device.

The information processing unit 60 is further configured to receive a message 1 for requesting a random access sent from the user equipment after sending the paging message to the user equipment and before creating the context for the user equipment, where the message 1 carries a random access preamble; to send a message 2 for responding to the random access request to the user equipment, where the message 2 carries an uplink Timing Advance (TA) and a C-RNTI; and to receive a message 3, carrying the scheduling RNTI, sent from the user equipment and to release the C-RNTI carried in the message 2.

The information processing unit 60 is configured to send a paging message carrying a dedicated preamble to the user equipment upon reception of the paging message from the core network device, where the dedicated preamble is different from a preamble for a random access of the user equipment; and to receive a message 1 for requesting a random access sent from the user equipment, where the message 1 carries the dedicated preamble, and to send a message 2 for responding to the random access request to the user equipment, where the message 2 carries the scheduling RNTI.

The information processing unit 60 is further configured to receive a message 3 sent from the user equipment after sending the message 2 to the user equipment and before creating the context for the user equipment, where the message 3 carries the scheduling RNTI.

The data transmitting unit 61 is configured, if it is determined from Buffer Status Report (BSR) information carried in the message 3 that the user equipment has uplink data to be transmitted, to schedule the uplink resource and the downlink resource for the user equipment over the PDCCH scrambled by the scheduling RNTI according to the context; otherwise, to schedule the downlink resource for the user equipment over the PDCCH scrambled by the scheduling RNTI according to the context.

The data transmitting unit 61 is further configured to send Acknowledgement (ACK) or Non-Acknowledgement (NACK) information to the user equipment dependent upon a reception condition upon reception of the uplink data transmitted from the user equipment over the scheduled uplink resource.

The data transmitting unit 61 is further configured, if only the downlink resource is scheduled for the user equipment, to carry an instruction for releasing the scheduling RNTI in the last piece of downlink data transmitted to the user equipment; and if ACK information fed back from the user equipment for the last piece of downlink data is received, to release the scheduling RNTI and the context; otherwise, to retransmit the last piece of downlink data carrying the instruction to the user equipment; or,
if the downlink resource and the uplink resource are scheduled for the user equipment, to send an instruction for releasing the scheduling RNTI in the following scheme A or scheme B: in the scheme A, to carry the instruction for releasing the scheduling RNTI in the last piece of downlink data transmitted to the user equipment after receiving correctly the uplink data transmitted from the user equipment and determining from BSR information carried in the uplink data that the uplink data is the last piece of data transmitted from the user equipment; and if ACK information fed back from the user equipment for the last piece of downlink data is received, to release the scheduling RNTI and the context; otherwise, to retransmit the last piece of downlink data carrying the instruction to the user equipment; and in the scheme B, to send the instruction for releasing the scheduling RNTI to the user equipment in signaling after receiving correctly the uplink data transmitted from the user equipment and determining from BSR information carried in the uplink data that the uplink data is the last piece of data transmitted from the user equipment, and after transmitting the last piece of downlink data to the user equipment; or
if only the uplink resource is scheduled for the user equipment, to send an instruction for releasing the scheduling RNTI to the user equipment after receiving correctly the uplink data transmitted from the user equipment and determining from BSR information carried in the uplink data that the uplink data is the last piece of data transmitted from the user equipment; and if ACK information fed back from the user equipment for the instruction is received, to release the scheduling RNTI and the context; otherwise, to retransmit the instruction to the user equipment.

The data transmitting unit 61 is further configured to start a valid scheduling RNTI timer after creating the context for the user equipment and before scheduling the uplink resource and/or the downlink resource for the user equipment over the PDCCH scrambled by the scheduling RNTI according to the context; and to stop the valid scheduling RNTI timer after releasing the scheduling RNTI and the context.

The data transmitting unit 61 is further configured to start a valid scheduling RNTI timer after creating the context for the user equipment and before scheduling the uplink resource and/or the downlink resource for the user equipment over the PDCCH scrambled by the scheduling RNTI according to the context; and if the scheduling RNTI and the context have not been released when the valid scheduling RNTI timer expires, to release the scheduling RNTI and the context.

The data transmitting unit 61 is further configured to send the received uplink data and/or transmission acknowledgement information about whether the downlink data has been transmitted successfully to a core network device.

The information processing unit 60 is configured to send a paging message for one cell; or to send paging messages respectively for cells in a Tracking Area (TA) as per a predetermined alternate paging rule.

The information processing unit 60 is configured to send the paging message to the user equipment upon determining from data transmission characteristic information carried in the paging message sent from the core network device that the current data transmission needs to be performed in a data transmission mode without establishing an RRC connection.

The user equipment is a user equipment without an RRC connection with the network side.

Based upon the same inventive idea, an embodiment of the invention further provides a user equipment, and since the user equipment addresses the problem under a similar principle to the method for transmitting data illustrated in Fig.4, so reference may be made to the implementation of the method for an implementation of the user equipment, and a repeated description thereof will be omitted here.

Referring to Fig.7, an embodiment of the invention provides a user equipment including:
a processing unit 70 configured to receive a scheduling Radio Network Temporary Identifier (RNTI) for scheduling a resource sent from an eNB; and
a transmitting unit 71 configured to detect a PDCCH scrambled by the scheduling RNTI and to transmit uplink data over an uplink resource scheduled by the detected PDCCH and/or to receive downlink data over a downlink resource scheduled by the detected PDCCH.

The processing unit 70 is configured to receive a paging message sent from the eNB, where the paging message carries the scheduling RNTI for scheduling a resource.

The processing unit 70 is further configured to send a message 1 for requesting a random access to the eNB after receiving the paging message sent from the eNB and before detecting the PDCCH scrambled by the scheduling RNTI, where the message 1 carries a random access preamble; and to receive a message 2, for responding to the random access request, sent from the eNB, where the message 2 carries an uplink Timing Advance (TA) and a C-RNTI, and to send a message 3 carrying the scheduling RNTI to the eNB.

The processing unit 70 is configured to receive a paging message sent from the eNB, where the paging message carries a dedicated preamble which is different from a preamble for a random access of the user equipment; to send a message 1 for requesting a random access to the eNB, where the message 1 carries the dedicated preamble; and to receive a message 2, for responding to the random access request, sent from the eNB, where the message 2 carries the scheduling RNTI.

The processing unit 70 is further configured to send a message 3 carrying the scheduling RNTI to the eNB after receiving the message 2 sent from the eNB and before detecting the PDCCH scrambled by the scheduling RNTI.

The processing unit 70 is further configured to send the message 3 carrying Buffer Status Report (BSR) information taking a value other than 0 to the eNB when the user equipment has uplink data to be transmitted.

The transmitting unit 71 is further configured to send Acknowledgement (ACK) or Non-Acknowledgement (NACK) information to the eNB dependent upon a reception condition after receiving the downlink data over the downlink resource scheduled by the detected PDCCH.

The transmitting unit 70 is further configured, if an instruction, for releasing the scheduling RNTI, sent from the eNB is received correctly, to feed ACK information back to the eNB, to release the scheduling RNTI and to stop detecting the PDCCH; otherwise, to feed NACK information back to the eNB and to continue with detecting the PDCCH, where instruction is carried in the downlink data or another message.

The transmitting unit 70 is further configured to start a valid scheduling RNTI timer after receiving the scheduling RNTI and before detecting the PDCCH scrambled by the scheduling RNTI; and to stop the valid scheduling RNTI timer after releasing the scheduling RNTI.

The transmitting unit 70 is further configured to start a valid scheduling RNTI timer after receiving the scheduling RNTI and before detecting the PDCCH scrambled by the scheduling RNTI; and if the scheduling RNTI has not been released when the valid scheduling RNTI timer expires, to release the scheduling RNTI and to stop detecting the PDCCH.

The user equipment is a user equipment without an RRC connection with the network side.

In summary, the invention has the following advantageous effects.

In the solution according to the embodiment of the invention, an eNB sends a scheduling RNTI to a user equipment, schedules an uplink resource and/or a downlink resource for the user equipment by the scheduling RNTI, receives uplink data transmitted from the user equipment over the scheduled uplink resource and transmits downlink data to the user equipment over the scheduled downlink resource. Apparently, with this method, the eNB may transmit the uplink and downlink data without establishing an RRC connection, and since an RRC connection needs to be established with a considerable signaling overhead, this solution can lower a signaling overhead of the system effectively.

In the solution according to the embodiment of the invention, a user equipment receives a scheduling RNTI sent from an eNB, detects a PDCCH scrambled by the scheduling RNTI and transmits uplink data and/or receives downlink data over a resource or resources scheduled by the detected PDCCH. Apparently, with this method, the user equipment may transmit the uplink/downlink data without establishing an RRC connection, and since an RRC connection needs to be established with a considerable signaling overhead, this solution can lower a signaling overhead of the system effectively.

The invention proposes a method for transmitting data without establishing an RRC connection, where a dedicated preamble or a scheduling RNTI is carried in a paging message, and an eNB schedules an uplink/downlink resource for a paged user equipment using the scheduling RNTI to perform data transmission without establishing an RRC connection, thus performing reliable transmission of data without establishing an RRC connection, saving a signaling interaction process, lowering a signaling overhead and also saving time.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions may also be loaded onto the computer or the other programmable data processing device so that a series of operational steps are performed on the computer or the other programmable data processing device to create a computer implemented process so that the instructions executed on the computer or the other programmable data processing device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention and their equivalents.

## Claims

1. A method for transmitting data, the method comprises:
an eNB sending (30) a scheduling Radio Network Temporary Identifier, RNTI, for scheduling a resource to a user equipment; and
the eNB creating (31) a context for the user equipment, scheduling an uplink resource and/or a downlink resource for the user equipment over a Physical Downlink Control Channel, PDCCH, scrambled by the scheduling RNTI according to the context, receiving uplink data transmitted from the user equipment over the scheduled uplink resource and transmitting downlink data to the user equipment over the scheduled downlink resource;
wherein the eNB sending (30) the scheduling RNTI for scheduling a resource to the user equipment comprises:
the eNB sending a paging message carrying the scheduling RNTI to the user equipment upon reception of a paging message from a core network device; or
the eNB sending (30) the scheduling RNTI for scheduling a resource to the user equipment comprises:
the eNB sending a paging message carrying a dedicated preamble to the user equipment upon reception of a paging message from a core network device, wherein the dedicated preamble is different from a preamble for a random access of the user equipment; and
the eNB receiving a message 1 for requesting a random access sent from the user equipment, wherein the message 1 carries the dedicated preamble, and sending a message 2 for responding to the random access request to the user equipment, wherein the message 2 carries the scheduling RNTI.

2. The method according to claim 1, wherein after the eNB sends the paging message carrying the scheduling RNTI to the user equipment and before the eNB creates the context for the user equipment, the method further comprises:
the eNB receiving a message 1 for requesting a random access sent from the user equipment, wherein the message 1 carries a random access preamble;
the eNB sending a message 2 for responding to the random access request to the user equipment, wherein the message 2 carries an uplink Timing Advance, TA, and a C-RNTI; and
the eNB receiving a message 3, carrying the scheduling RNTI, sent from the user equipment and releasing the C-RNTI carried in the message 2.

3. The method according to claim 1 or 2, further comprising:
if the eNB schedules only the downlink resource for the user equipment, then the eNB carrying an instruction for releasing the scheduling RNTI in the last piece of downlink data transmitted to the user equipment; and if the eNB receives ACK information fed back from the user equipment for the last piece of downlink data, then releasing the scheduling RNTI and the context; otherwise, retransmitting the last piece of downlink data carrying the instruction to the user equipment;
or
if the eNB schedules the downlink resource and the uplink resource for the user equipment, then the eNB sending an instruction for releasing the scheduling RNTI in the following scheme A or scheme B: in the scheme A, the eNB carrying the instruction for releasing the scheduling RNTI in the last piece of downlink data transmitted to the user equipment after receiving correctly the uplink data transmitted from the user equipment and determining from BSR information carried in the uplink data that the uplink data is the last piece of data transmitted from the user equipment; and if the eNB receives ACK information fed back from the user equipment for the last piece of downlink data, then releasing the scheduling RNTI and the context; otherwise, retransmitting the last piece of downlink data carrying the instruction to the user equipment; and in the scheme B, the eNB sending the instruction for releasing the scheduling RNTI to the user equipment in signaling after receiving correctly the uplink data transmitted from the user equipment and determining from BSR information carried in the uplink data that the uplink data is the last piece of data transmitted from the user equipment, and after transmitting the last piece of downlink data to the user equipment;
or
if the eNB schedules only the uplink resource for the user equipment, then the eNB sending an instruction for releasing the scheduling RNTI to the user equipment after receiving correctly the uplink data transmitted from the user equipment and determining from BSR information carried in the uplink data that the uplink data is the last piece of data transmitted from the user equipment; and if the eNB receives ACK information fed back from the user equipment for the instruction, then releasing the scheduling RNTI and the context; otherwise, retransmitting the instruction to the user equipment.

4. The method according to claim 3, wherein after the eNB creates the context for the user equipment and before the eNB schedules the uplink resource and/or the downlink resource for the user equipment over the PDCCH scrambled by the scheduling RNTI according to the context, the method further comprises: the eNB starting a valid scheduling RNTI timer; and
wherein after the eNB releases the scheduling RNTI and the context, the method further comprises: stopping the valid scheduling RNTI timer;
and wherein if the scheduling RNTI and the context have not been released when the valid scheduling RNTI timer expires, then the eNB releasing the scheduling RNTI and the context.

5. The method according to claim 1, wherein the eNB sends the paging message to the user equipment upon determining from data transmission characteristic information carried in the paging message sent from the core network device that the current data transmission needs to be performed in a data transmission mode without establishing a Radio Resource Control, RRC, connection,
and wherein the user equipment is a user equipment without an RRC connection with the network side.

6. A method for transmitting data, the method comprises:
a user equipment receiving (40) a scheduling Radio Network Temporary Identifier, RNTI, for scheduling a resource sent from an eNB; and
the user equipment detecting (41) a Physical Downlink Control Channel, PDCCH, scrambled by the scheduling RNTI, and transmitting uplink data over an uplink resource scheduled by the detected PDCCH and/or receiving downlink data over a downlink resource scheduled by the detected PDCCH;
wherein the user equipment receiving (40) the scheduling RNTI for scheduling a resource sent from the eNB comprises:
the user equipment receiving a paging message sent from the eNB, wherein the paging message carries the scheduling RNTI for scheduling a resource; or
the user equipment receiving (40) the scheduling RNTI for scheduling a resource sent from the eNB comprises:
the user equipment receiving a paging message sent from the eNB, wherein the paging message carries a dedicated preamble which is different from a preamble for a random access of the user equipment;
the user equipment sending a message 1 for requesting a random access to the eNB, wherein the message 1 carries the dedicated preamble; and
the user equipment receiving a message 2, for responding to the random access request, sent from the eNB, wherein the message 2 carries the scheduling RNTI.

7. The method according to claim 6, wherein after the user equipment receives the paging message carrying the scheduling RNTI sent from the eNB and before the user equipment detects the PDCCH scrambled by the scheduling RNTI, the method further comprises:
the user equipment sending a message 1 for requesting a random access to the eNB, wherein the message 1 carries a random access preamble; and
the user equipment receive a message 2, for responding to the random access request, sent from the eNB, wherein the message 2 carries an uplink Timing Advance, TA, and a C-RNTI, and sending a message 3 carrying the scheduling RNTI to the eNB.

8. The method according to claim 6, wherein after the user equipment receives the message 2 sent from the eNB and before the user equipment detects the PDCCH scrambled by the scheduling RNTI, the method further comprises:
the user equipment sending a message 3 carrying the scheduling RNTI to the eNB.

9. The method according to claim 7 or 8, wherein if the user equipment has uplink data to be transmitted, then the message 3 further carries BSR, information taking a value other than 0.

10. The method according to any one of claims 6-8, further comprising:
if the user equipment receives correctly an instruction, for releasing the scheduling RNTI, sent from the eNB, then feeding ACK information back to the eNB, releasing the scheduling RNTI and stopping detecting the PDCCH; otherwise, feeding NACK information back to the eNB and continuing with detecting the PDCCH, wherein instruction is carried in the downlink data or another message.

11. The method according to claim 10, wherein after the user equipment receives the scheduling RNTI and before the user equipment detects the PDCCH scrambled by the scheduling RNTI, the method further comprises: the user equipment starting a valid scheduling RNTI timer; and
wherein after the user equipment releases the scheduling RNTI, the method further comprises: stopping the valid scheduling RNTI timer;
and wherein if the scheduling RNTI has not been released when the valid scheduling RNTI timer expires, then the user equipment releasing the scheduling RNTI and stopping detecting the PDCCH.

## Patentansprüche

1. Verfahren zum Übertragen von Daten, wobei das Verfahren Folgendes umfasst:
ein eNB sendet (30) eine temporäre Planungs-Funknetzkennung, Planungs-RNTI, zum Planen eines Betriebsmittels zu einem Anwendergerät; und
der eNB erzeugt (31) einen Kontext für das Anwendergerät, plant ein Aufwärtsstreckenbetriebsmittel und/oder ein Abwärtsstreckenbetriebsmittel für das Anwendergerät über einen physikalischen Abwärtsstreckensteuerkanal, PDCCH, der durch die Planungs-RNTI gemäß dem Kontext verwürfelt ist, empfängt Aufwärtsstreckendaten, die von dem Anwendergerät über das geplante Aufwärtsstreckenbetriebsmittel übertragen werden, und überträgt Abwärtsstreckendaten über das geplante Abwärtsstreckenbetriebsmittel zu dem Anwendergerät;
wobei das Senden (30) der Planungs-RNTI zum Planen eines Betriebsmittels zu dem Anwendergerät durch den eNB Folgendes umfasst:
der eNB sendet eine Suchnachricht, die die Planungs-RNTI führt, zu dem Anwendergerät nach dem Empfang einer Suchnachricht von einer Kernnetzvorrichtung; oder
das Senden (30) der Planungs-RNTI zum Planen eines Betriebsmittels zu dem Anwendergerät durch den eNB Folgendes umfasst:
der eNB sendet eine Suchnachricht, die einen dedizierten Vorspann führt, zu dem Anwendergerät nach dem Empfang einer Suchnachricht von einer Kernnetzvorrichtung, wobei der dedizierte Vorspann von einem Vorspann für einen Direktzugriff des Anwendergeräts verschieden ist; und
der eNB empfängt eine Nachricht 1 zum Anfordern eines Direktzugriffs, die von dem Anwendergerät gesendet wird, wobei die Nachricht 1 den dedizierten Vorspann führt, und sendet eine Nachricht 2 zum Antworten auf die Direktzugriffsanforderung zu dem Anwendergerät, wobei die Nachricht 2 die Planungs-RNTI führt.

2. Verfahren nach Anspruch 1, wobei das Verfahren, nachdem der eNB die Suchnachricht, die die Planungs-RNTI führt, zu dem Anwendergerät sendet und bevor der eNB den Kontext für das Anwendergerät erzeugt, ferner Folgendes umfasst:
der eNB empfängt eine Nachricht 1 zum Anfordern eines Direktzugriffs, die von dem Anwendergerät gesendet wird, wobei die Nachricht 1 einen Direktzugriffsvorspann führt;
der eNB sendet eine Nachricht 2 zum Antworten auf die Direktzugriffsanforderung zu dem Anwendergerät, wobei die Nachricht 2 einen Aufwärtsstrecken-Zeitvorlauf, Aufwärtsstrecken-TA, und eine C-RNTI führt; und
der eNB empfängt eine Nachricht 3, die die Planungs-RNTI führt, die von dem Anwendergerät gesendet wird, und gibt die C-RNTI, die in der Nachricht 2 geführt ist, frei.

3. Verfahren nach Anspruch 1 oder 2, das ferner Folgendes umfasst:
falls der eNB nur das Abwärtsstreckenbetriebsmittel für das Anwendergerät plant, dann führt der eNB einen Befehl zum Freigeben der Planungs-RNTI in der letzten Abwärtsstreckendateneinheit, die zu dem Anwendergerät gesendet wird; und falls der eNB ACK-Informationen empfängt, die von dem Anwendergerät für die letzte Abwärtsstreckendateneinheit zurückgegeben werden, dann gibt er dann die Planungs-RNTI und den Kontext frei; andernfalls sendet er erneut die letzte Abwärtsstreckendateneinheit, die den Befehl führt, zu dem Anwendergerät;
oder
falls der eNB das Abwärtsstreckenbetriebsmittel und das Aufwärtsstreckenbetriebsmittel für das Anwendergerät plant, dann sendet der eNB einen Befehl zum Freigeben der Planungs-RNTI in dem folgenden Schema A oder Schema B: in dem Schema A führt der eNB den Befehl zum Freigeben der Planungs-RNTI in dem letzten Abwärtsstreckendatenelement, das zu dem Anwendergerät übertragen wird, nach dem korrekten Empfangen der Aufwärtsstreckendaten, die von dem Anwendergerät übertragen werden, und dem Bestimmen aus BSR-Informationen, die in den Aufwärtsstreckendaten geführt sind, dass die Aufwärtsstreckendaten das letzte Aufwärtsstreckendatenelement sind, das von dem Anwendergerät übertragen wird; und falls der eNB ACK-Informationen empfängt, die von dem Anwendergerät für die letzte Abwärtsstreckendateneinheit zurückgegeben werden, gibt er dann die Planungs-RNTI und den Kontext frei; andernfalls sendet er erneut die letzte Abwärtsstreckendateneinheit, die den Befehl führt, zu dem Anwendergerät; und in Schema B sendet der eNB den Befehl zum Freigeben der Planungs-RNTI zu dem Anwendergerät in einer Signalisierung nach dem korrekten Empfangen der Aufwärtsstreckendaten, die von dem Anwendergerät übertragen werden, und dem Bestimmen aus den BSR-Informationen, die in den Aufwärtsstreckendaten geführt sind, dass die Aufwärtsstreckendaten das letzte Aufwärtsstreckendatenelement sind, das von dem Anwendergerät übertragen wird, und nach dem Übertragen des letzten Abwärtsstreckendatenelements zu dem Anwendergerät;
oder
falls der eNB nur das Aufwärtsstreckenbetriebsmittel für das Anwendergerät plant, dann sendet der eNB einen Befehl zum Freigeben der Planungs-RNTI zu dem Anwendergerät nach dem korrekten Empfangen der Aufwärtsstreckendaten, die von dem Anwendergerät übertragen werden, und dem Bestimmen aus den BSR-Informationen, die in den Aufwärtsstreckendaten geführt sind, dass die Aufwärtsstreckendaten das letzte Aufwärtsstreckendatenelement sind, das von dem Anwendergerät übertragen wird; und falls der eNB ACK-Informationen empfängt, die von dem Anwendergerät für den Befehl zurückgegeben werden, gibt er dann die Planungs-RNTI und den Kontext frei; andernfalls sendet er den Befehl erneut zu dem Anwendergerät.

4. Verfahren nach Anspruch 3, wobei das Verfahren, nachdem der eNB den Kontext für das Anwendergerät erzeugt und bevor der eNB das Aufwärtsstreckenbetriebsmittel und/oder das Abwärtsstreckenbetriebsmittel für das Anwendergerät über den PDCCH plant, der durch die Planungs-RNTI gemäß dem Kontext verwürfelt ist, ferner Folgendes umfasst: der eNB startet einen Zeitgeber für eine gültige Planungs-RNTI; und
wobei das Verfahren, nachdem der eNB die Planungs-RNTI und den Kontext freigibt, ferner Folgendes umfasst: Anhalten des Zeitgeber für eine gültige Planungs-RNTI;
und wobei, falls die Planungs-RNTI und der Kontext nicht freigegeben worden sind, wenn der Zeitgeber für die gültige Planungs-RNTI abläuft, der eNB dann die Planungs-RNTI und den Kontext freigibt.

5. Verfahren nach Anspruch 1, wobei der eNB die Suchnachricht zu dem Anwendergerät sendet nach dem Bestimmen aus Datenübertragungseigenschaftsinformationen, die in der Suchnachricht geführt sind, die von der Kernnetzvorrichtung gesendet wird, dass die aktuelle Datenübertragung in einer Datenübertragungsbetriebsart ohne Aufbau einer Funkbetriebsmittelsteuerungs-Verbindung, RRC-Verbindung, ausgeführt werden muss,
und wobei das Anwendergerät ein Anwendergerät ohne eine RRC-Verbindung mit der Netzseite ist.

6. Verfahren zum Übertragen von Daten, wobei das Verfahren Folgendes umfasst:
ein Anwendergerät (40) empfängt eine temporäre Planungs-Funknetzkennung, Planungs-RNTI, zum Planen eines Betriebsmittels, die von einem eNB gesendet wird; und
das Anwendergerät detektiert (41) einen physikalischen Abwärtsstreckensteuerkanal, PDCCH, der durch die Planungs-RNTI verwürfelt ist, und sendet Aufwärtsstreckendaten über ein Aufwärtsstreckenbetriebsmittel, das durch den detektierten PDCCH geplant ist, und/oder empfängt Abwärtsstreckendaten über ein Abwärtsstreckenbetriebsmittel, das durch den detektierten PDCCH geplant ist;
wobei das Empfangen (40) der Planungs-RNTI zum Planen eines Betriebsmittels, die von dem eNB gesendet wird, durch das Anwendergerät Folgendes umfasst:
das Anwendergerät empfängt eine Suchnachricht, die von dem eNB gesendet wird, wobei die Suchnachricht die Planungs-RNTI zum Planen eines Betriebsmittels führt; oder
das Empfangen (40) der Planungs-RNTI zum Planen eines Betriebsmittels, die von dem eNB gesendet wird, durch das Anwendergerät Folgendes umfasst:
das Anwendergerät empfängt eine Suchnachricht, die von dem eNB gesendet wird, wobei die Suchnachricht einen dedizierten Vorspann führt, der von einem Vorspann für einen Direktzugriff des Anwendergeräts verschieden ist;
das Anwendergerät sendet eine Nachricht 1 zum Anfordern eines Direktzugriffs zu dem eNB, wobei die Nachricht 1 den dedizierten Vorspann führt; und
das Anwendergerät empfängt eine Nachricht 2 zum Antworten auf die Direktzugriffsanforderung, die von dem eNB gesendet wird, wobei die Nachricht 2 die Planungs-RNTI führt.

7. Verfahren nach Anspruch 6, wobei das Verfahren, nachdem das Anwendergerät die Suchnachricht, die die Planungs-RNTI führt, die von dem eNB gesendet wird, empfängt und bevor das Anwendergerät den PDCCH detektiert, der durch die Planungs-RNTI verwürfelt ist, ferner Folgendes umfasst:
das Anwendergerät sendet eine Nachricht 1 zum Anfordern eines Direktzugriffs zu dem eNB, wobei die Nachricht 1 einen Direktzugriffsvorspann führt; und
das Anwendergerät empfängt eine Nachricht 2 zum Antworten auf die Direktzugriffsanforderung, die durch den eNB gesendet wird, wobei die Nachricht 2 einen Aufwärtsstrecken-Zeitvorlauf, Aufwärtsstrecken-TA, und eine C-RNTI führt, und sendet eine Nachricht 3, die die Planungs-RNTI führt, zu dem eNB.

8. Verfahren nach Anspruch 6, wobei das Verfahren, nachdem das Anwendergerät die Nachricht 2, die von dem eNB gesendet wird, empfängt und bevor das Anwendergerät den PDCCH detektiert, der durch die Planungs-RNTI verwürfelt ist, ferner Folgendes umfasst:
das Anwendergerät sendet eine Nachricht 3, die die Planungs-RNTI führt, zu dem eNB.

9. Verfahren nach Anspruch 7 oder 8, wobei, falls das Anwendergerät Aufwärtsstreckendaten aufweist, die übertragen werden sollen, dann die Nachricht 3 ferner BSR-Informationen führt, die einen Wert ungleich 0 annehmen.

10. Verfahren nach einem der Ansprüche 6-8, ferner Folgendes umfasst:
falls das Anwendergerät einen Befehl zum Freigeben der Planungs-RNTI, der von dem eNB gesendet wird, korrekt empfängt, dann Rückmelden von ACK-Informationen zu dem eNB, Freigeben der Planungs-RNTI und Anhalten des Detektierens des PDCCH; andernfalls Rückmelden von NACK-Informationen zu dem eNB und Weiterführen des Detektierens des PDCCH, wobei der Befehl in dem Abwärtsstreckendaten oder einer weiteren Nachricht geführt ist.

11. Verfahren nach Anspruch 10, wobei das Verfahren, nachdem das Anwendergerät die Planungs-RNTI empfängt und bevor das Anwendergerät den PDCCH, der durch die Planungs-RNTI verwürfelt ist, detektiert, ferner Folgendes umfasst: das Anwendergerät startet einen Zeitgeber für eine gültige Planungs-RNTI; und
wobei das Verfahren, nachdem das Anwendergerät die Planungs-RNTI freigibt, ferner Folgendes umfasst: Anhalten des Zeitgeber für eine gültige Planungs-RNTI;
und wobei, falls die Planungs-RNTI nicht freigegeben worden ist, wenn der Zeitgeber für die gültige Planungs-RNTI abläuft, das Anwendergerät die Planungs-RNTI freigibt und das Detektieren des PDCCH anhält.

## Revendications

1. Procédé de transmission de données, le procédé comprenant :
l'envoi par un eNB (30) d'un Identifiant Temporaire de Réseau Radio, RNTI (Radio Network Temporary Identifier) de planification, pour planifier une ressource destinée à un équipement d'utilisateur ; et
la création par l'eNB (31) d'un contexte pour l'équipement d'utilisateur, la planification d'une ressource de liaison montante et/ou d'une ressource de liaison descendante pour l'équipement d'utilisateur par l'intermédiaire d'un Canal de Commande de Liaison Descendante Physique, PDCCH (Physical Downlink Control Channel), embrouillé par le RNTI de planification conformément au contexte, la réception de données de liaison montante transmises par l'équipement d'utilisateur par l'intermédiaire de la ressource de liaison montante planifiée et la transmission de données de liaison descendante à l'équipement d'utilisateur par l'intermédiaire de la ressource de liaison descendante planifiée ;
dans lequel l'envoi par l'eNB (30) du RNTI de planification pour planifier une ressource destinée à l'équipement d'utilisateur comprend :
l'envoi par l'eNB d'un message de recherche transportant le RNTI de planification à l'équipement d'utilisateur lors de la réception d'un message de recherche en provenance d'un dispositif de coeur de réseau ; ou
l'envoi par l'eNB (30) du RNTI de planification pour planifier une ressource destinée à l'équipement d'utilisateur comprend :
l'envoi par l'eNB d'un message de recherche acheminant un préambule dédié à l'équipement d'utilisateur lors de la réception d'un message de recherche en provenance du dispositif de coeur de réseau, dans lequel le préambule dédié est différent d'un préambule d'accès aléatoire de l'équipement d'utilisateur ; et
la réception par l'eNB d'un message 1 de demande d'accès aléatoire envoyé par l'équipement d'utilisateur, dans lequel le message 1 transporte le préambule dédié, et l'envoi d'un message 2 de réponse à la demande d'accès aléatoire à l'équipement d'utilisateur, dans lequel le message 2 transporte le RNTI de planification.

2. Procédé selon la revendication 1, dans lequel, après que l'eNB a envoyé le message de recherche transportant le RNTI de planification à l'équipement d'utilisateur et avant que l'eNB ne crée le contexte pour l'équipement d'utilisateur, le procédé comprend en outre :
la réception par l'eNB d'un message 1 de demande d'accès aléatoire envoyé par l'équipement d'utilisateur, dans lequel le message 1 transporte un préambule d'accès aléatoire ;
l'envoi par l'eNB d'un message 2 de réponse à la demande d'accès aléatoire à l'équipement d'utilisateur, dans lequel le message 2 transporte une Avance de Temporisation, TA (Timing Advance), de liaison montante, et un C-RNTI ; et
la réception par l'eNB d'un message 3, transportant le RNTI de planification, envoyé par l'équipement d'utilisateur, et la mise à disposition du C-RNTI transporté dans le message 2.

3. Procédé selon la revendication 1 ou 2, comprenant en outre :
si l'eNB ne planifie que la ressource de liaison descendante pour l'équipement d'utilisateur, alors, le transport par l'eNB d'une instruction de mise à disposition du RNTI de planification dans la dernière donnée de liaison descendante transmise à l'équipement d'utilisateur ; et si l'eNB reçoit des informations ACK renvoyées par l'équipement d'utilisateur pour la dernière donnée de liaison descendante, la mise à disposition alors, du RNTI de planification ; et dans le cas contraire, la retransmission de la dernière donnée de liaison descendante transportant l'instruction à l'équipement d'utilisateur ;
ou
si l'eNB planifie la ressource de liaison descendante et la ressource de liaison montante pour l'équipement d'utilisateur, alors, l'envoi par l'eNB d'une instruction de mise à disposition du RNTI de planification conformément au schéma A ou au schéma B suivant : selon le schéma A, le transport par l'eNB de l'instruction de mise à disposition du RNTI de planification dans la dernière donnée de liaison descendante transmise à l'équipement d'utilisateur après réception correcte des données de liaison montante transmises par l'équipement d'utilisateur et la détermination à partir des informations BSR transportées dans les données de liaison montante du fait que les données de liaison montante sont la dernière donnée transmise par l'équipement d'utilisateur ; et si l'eNB reçoit des informations ACK renvoyées par l'équipement d'utilisateur pour la dernière donnée de liaison descendante, alors, la mise à disposition du RNTI de planification et du contexte ; et dans le cas contraire, la retransmission de la dernière donnée de liaison descendante transportant l'instruction à l'équipement d'utilisateur ; et, selon le schéma B, l'envoi par l'eNB de l'instruction de mise à disposition du RNTI de planification à l'équipement d'utilisateur dans une signalisation après réception correcte des données de liaison montante transmises par l'équipement d'utilisateur et la détermination à partir d'informations BSR transportées dans les données de liaison montante du fait que les données de liaison montante sont la dernière donnée transmise par l'équipement d'utilisateur et, après cela, la transmission de la dernière donnée de liaison descendante à l'équipement d'utilisateur ;
ou
si l'eNB ne planifie que la ressource de liaison montante pour l'équipement d'utilisateur, alors, l'envoi par l'eNB d'une instruction de mise à disposition du RNTI de planification à l'équipement d'utilisateur après réception correcte des données de liaison montante transmises par l'équipement d'utilisateur et la détermination à partir d'informations BSR transportées dans les données de liaison montante du fait que les données de liaison montante sont la dernière donnée transmise par l'équipement d'utilisateur ; et si l'eNB reçoit des informations ACK renvoyées par l'équipement d'utilisateur pour l'instruction, alors, la mise à disposition du RNTI de planification et du contexte ; et dans le cas contraire, la retransmission de l'instruction à l'équipement d'utilisateur.

4. Procédé selon la revendication 3, dans lequel, après que l'eNB a créé le contexte pour l'équipement d'utilisateur et avant que l'eNB ne planifie la ressource de liaison montante et/ou la ressource de liaison descendante pour l'équipement d'utilisateur par l'intermédiaire du PDCCH embrouillé par le RNTI de planification conformément au contexte, le procédé comprend en outre : le déclenchement par l'eNB d'une temporisation RNTI de planification valide ; et
dans lequel, après que l'eNB a mis à disposition le RNTI de planification et le contexte, le procédé comprend en outre : l'arrêt de la temporisation RNTI de planification valide ;
et dans lequel, si le RNTI de planification et le contexte n'ont pas été mis à disposition lorsque la temporisation RNTI de planification valide s'est écoulée, alors, l'envoi par l'eNB du RNTI de planification et du contexte.

5. Procédé selon la revendication 1, dans lequel l'eNB envoie le message de recherche à l'équipement d'utilisateur lorsqu'il est déterminé à partir d'informations caractéristiques de transmission de données transportées dans le message de recherche envoyé par le dispositif de coeur de réseau, que la transmission de données courantes doit être effectuée dans un mode de transmission de données sans établir de connexion de Commande de Ressources Radio, RRC (Radio Resource Control),
et dans lequel l'équipement d'utilisateur est un équipement d'utilisateur sans connexion RRC au côté réseau.

6. Procédé de transmission de données, le procédé comprenant :
la réception (40) par un équipement d'utilisateur d'un Identifiant Temporaire de Réseau Radio, RNTI, de planification, pour planifier une ressource envoyée par un eNB ; et
la détection (41) par l'équipement d'utilisateur, d'un Canal de Commande de Liaison Descendante Physique, PDCCH, embrouillé par le RNTI de planification, et la transmission de données de liaison montante par l'intermédiaire d'une ressource de liaison montante planifiée par le PDCCH détecté et/ou la réception de données de liaison descendante par l'intermédiaire d'une ressource de liaison descendante planifiée par le PDCCH détecté ;
dans lequel la réception (40) par l'équipement d'utilisateur du RNTI de planification pour planifier une ressource envoyée par l'eNB comprend :
la réception par l'équipement d'utilisateur d'un message de recherche envoyé par l'eNB, dans lequel le message de recherche transporte le RNTI de planification pour planifier une ressource ; ou
la réception (40) par l'équipement d'utilisateur du RNTI de planification pour planifier une ressource envoyée par l'eNB comprend :
la réception par l'équipement d'utilisateur d'un message de recherche envoyé par l'eNB, dans lequel le message de recherche transporte un préambule dédié qui est différent d'un préambule d'accès aléatoire de l'équipement d'utilisateur ;
l'envoi par l'équipement d'utilisateur d'un message 1 de demande d'accès aléatoire à l'eNB, dans lequel le message 1 transporte le préambule dédié ; et
la réception par l'équipement d'utilisateur d'un message 2 de réponse à la demande d'accès aléatoire, envoyé par l'eNB, dans lequel le message 2 transporte le RNTI de planification.

7. Procédé selon la revendication 6, dans lequel, après que l'équipement d'utilisateur a reçu le message de recherche transportant le RNTI de planification envoyé par l'eNB et avant que l'équipement d'utilisateur ne détecte le PDCCH envoyé par le RNTI de planification, le procédé comprend en outre :
l'envoi par l'équipement d'utilisateur d'un message 1 de demande d'accès aléatoire à l'eNB, dans lequel le message 1 transporte un préambule d'accès aléatoire ; et
la réception par l'équipement d'utilisateur d'un message 2 de réponse à la demande d'accès aléatoire, envoyé par l'eNB, dans lequel le message 2 transporte une Avance de Temporisation, TA, de liaison montante, et un C-RNTI ; et l'envoi d'un message 3 transportant le RNTI de planification à l'eNB.

8. Procédé selon la revendication 6, dans lequel, après que l'équipement d'utilisateur a reçu le message 2 envoyé par l'eNB et avant que l'équipement d'utilisateur ne détecte le PDCCH envoyé par le RNTI de planification, le procédé comprend en outre :
l'envoi par l'équipement d'utilisateur d'un message 3 transportant le RNTI de planification à l'eNB.

9. Procédé selon la revendication 7 ou 8, dans lequel, si l'équipement d'utilisateur dispose de données de liaison montante à transmettre, alors, le message 3 transporte en outre des informations BSR ayant une valeur différente de 0.

10. Procédé selon l'une quelconque des revendications 6-8, comprenant en outre :
si l'équipement d'utilisateur reçoit correctement une instruction de mise à disposition du RNTI de planification envoyé par l'eNB, alors, le renvoi d'informations ACK à l'eNB, la mise à disposition du RNTI de planification et l'arrêt de la détection du PDCCH ; dans le cas contraire, le renvoi d'informations NACK à l'eNB et la poursuite de la détection du PDCCH, dans lequel l'instruction est transportée dans les données de liaison descendante ou dans un autre message.

11. Procédé selon la revendication 10, dans lequel, après que l'équipement d'utilisateur a reçu le RNTI de planification et avant que l'équipement d'utilisateur ne détecte le PDCCH embrouillé par le RNTI de planification, le procédé comprend en outre : le déclenchement par l'équipement d'utilisateur d'une temporisation RNTI de planification valide ; et
dans lequel, après que l'équipement d'utilisateur a mis à disposition le RNTI de planification, le procédé comprend en outre : l'arrêt de la temporisation RNTI de planification valide ;
et dans lequel, si le RNTI de planification n'a pas été mis à disposition lorsque la temporisation RNTI de planification valide s'est écoulée, alors, la mise à disposition par l'équipement d'utilisateur du RNTI de planification et l'arrêt de la détection du PDCCH.
